# EUROPEAN PATENT APPLICATION

(11) **EP 2 638 983 A1**
(43) Date of publication of application: **18.09.2013**
(21) Application number: 12168731.3
(22) Date of filing: 21.05.2012
(51) Int. Cl.: B21D 5/08, B21D 21/00, B21D 47/04, B32B 15/04, B32B 3/28, E04C 3/07

(54) **A method of producing thin-walled angle bars with a shaped surface, increased strength and decreased thermal conductivity**

(30) Priority: 15.03.2012 PL 39844912
(71) Applicant: DP Stal Sp z o.o., 09-410 Plock (PL)
(72) Inventor: Swiatek, Przemyslaw, 09-470 Slupno (PL); Stelmach, Robert, 09-411 Plock (PL)
(74) Representative: Witek, Rafal

(57) **Abstract**

The subject of the present invention is a method of producing a thin-walled angle bar with a shaped surface, in which the angle bar is profiled in a continuous fashion between rotary shaping dies wherein the sheet metal is subjected to initial processing characterised in that it encompasses
a) unwinding an external sheet metal profile with a thickness smaller than the thickness of an internal sheet metal profile, preferably with a thickness of 0.5 mm, from an external unwinder (2) and transferring it onto spheroid profile (5) to make a spheroid embossment in the sheet metal
b) unwinding an internal sheet metal profile, preferably with a thickness of 0.7 mm, from an internal unwinder (1) and transferring it onto an elongate profile (6) via a tensioning system (4) to make an elongate embossment in the sheet metal
c) unwinding a material tape from an unwinder (3) and placing it between the sheet metal exiting the elongate profile (6) of stage b) and the sheet metal exiting the spheroid profile (5) of stage a)
d) shaping the angle bar in a roller system (7) for material exiting stage c) that consists of an external sheet metal profile and an internal sheet metal profile and the tape from unwinder (3) placed between them
e) a follow-up cut on the angle bar exiting the roller system (7) of stage d)

## Description

The subject of the present invention is a method of producing thin-walled angle bar with a shaped surface, increased strength and decreased thermal conductivity used as a structural element in construction, particularly as a load-bearing and mounting element for drywall.

Polish patent PL1832138 discloses a method of producing thin-walled angle bar with a shaped surface, in which the angle bar is profile in a continuous fashion between shaping rollers, characterised in that the source material, a thin metal tape, is initially processed such that as it moves, dense, alternating point indentations are made in it in both surfaces, upper and lower, wherein they are impressed in a point-like manner, preferably over the whole surface without altering the initial thickness, whereafter such a tape is subjected to a known profile into an angle bar with the requisite cross-section via plastic deformation. The angle bar produced according to this method, despite its many advantages such as low weight is characterised by a limited strength dependent on sheet-metal thickness and high thermal conductivity. Moreover, profile sheet metal more than 1 mm thick is energy intensive and loud, and causes overheating in rotating dies and the shaped material. Polish patent PL198735 discloses a method of producing thin-walled angle bar, according to which the final shape of the product is obtained via plastic deformation between rotating dies, characterised in that parallel tapes for manufacturing the walls of the angle bar are fed with constant motion from two independent drums, which are then permanently joined across the intervening space with cross-bridges, separated by a predetermined distance, and the thusly formed intermediate product is fed between the rollers of the profile machine that gives it its final shape, and at the same time the shelf surface is given a stiffening texture in the form of point-like indentations. The angle bar has large open spaces 3 that decrease its thermal conductivity. Moreover, its particular structure also lowers its strength. The connections between the bridges and shelves may be too weak to bear large loads. The thin-walled angle bar disclosed in Polish patent PL206869 also has similar disadvantages, which is characterised in that in order to make permanent joints between the shelves (1a) and bridges in the form of diagonal ribs (2) adjacent fragments of the shelves (1a) and bridges are bent and pressed together (1a) creating unbreakable locks therefrom (5), whereas the sheet steel tapes (1) are tensed such that they are under uniform tension at least throughout the joining of the shelves (1a) with the bridges, wherein each of the tapes has a separate system of profile dies (B 1 and C1). There is thus a continued need to deliver a method of producing angle bars, which would be characterised by a high strength and low weight, as well as a low thermal conductivity, wherein the method will be characterised by lower energy usage and noise. Unexpectedly, the aforementioned problems have been solved by the present invention.

The subject of the present invention is a method of producing a thin-walled angle bar with a shaped surface, in which the angle bar is profiled in a continuous fashion between rotary shaping dies wherein the sheet metal is subjected to initial processing characterised in that it encompasses a) unwinding an external sheet metal profile with a thickness smaller than the thickness of the internal sheet metal profile, preferably with a thickness 0.5 mm, from an external undwinder and transferring it onto a spheroid profile to make spheroid embossment in the sheet metal, b) unwinding an internal sheet metal profile, preferably with a thickness of 0.7 mm, from an internal unwinder and transferring it onto an elongate profile via a tensioning system to make an elongate embossment in the sheet metal, c) unwinding a material tape from an unwinder and placing it between the sheet metal exiting the elongate profile of stage b) and the sheet metal exiting the spheroid profile of stage a), d) shaping the angle bar in a roller system for material exiting stage c) consisting of an external sheet metal profile and internal sheet metal profile as well as the tape from the unwinder located between them, and e) and a follow up cut made on the angle bar exiting the roller system of stage d).

A method according to the present invention makes it possible to produce an angle bar with a decreased thermal penetrance due to the use of a profile with air pockets and an insulating tape placed between the walls of the profile. The specific type of construction facilitates much greater bending load bearing. Moreover, the use of thin sheet metal of various thicknesses makes it possible to obtain higher strength and resilience parameters. The present invention enables the selection of particular forms of sheet metal, according to the requirements of the recipient in order to obtain required strength and rigidity parameters of the profile. During the production of the angle bar according to the present invention, due to the use of thinner sheet metal in the angle bar, we have eliminated the use of water and emulsifier solutions, which were used as lubricants and coolants required following a certain period of use. The use of sheet metal with a thickness between 0.5 mm and 0.7 mm in the improved angle bar significantly lowers the energy usage of the production line. This is connected with the force necessary to bend the sheet metal using the profiling rollers. The bending of thinner sheet metal and the use of an internal tape also entails decreased production line noise, which has a beneficial effect on the work environment.

The drawings show example embodiments of the present invention, wherein Fig. 1 represents a schematic of a production line according to the present invention, Fig. 2 is a transverse section through an angle bar made according to the present invention, Fig. 3 is an angle bar known from the state of the art examined in example 2, Fig. 4 is an angle bar from the state of the art used in Example 3 to compare angle bar strengths, Fig. 5 is an angle bar according to the present invention used in Example 3, Fig. 6 is a loading schematic of an angle bar of Example 3, Fig. 7 solid models were divided into finite elements using 4-node TET-type elements and 8-node HEX-type elements; a) the state of the art, b) according to the present invention, Fig. 8 a stress dispersion map in a bar for: a - U35-1 angle bar, b - an angle bar according to the present invention.

### Example 1

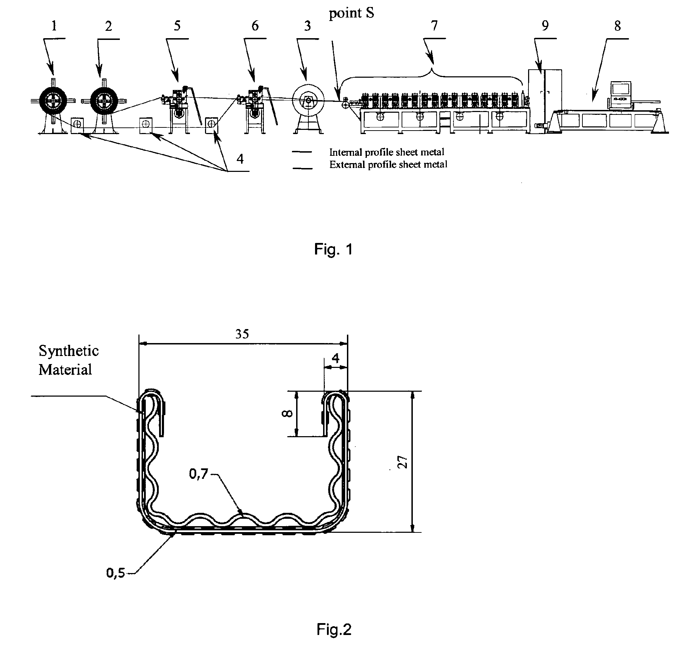

A general schematic of the production line has been shown in Fig.1. The line contains the following elements: internal unwinder 1, containing a roll of sheet metal meant for the internal profile with elongate embossment, an external unwinder 2, containing a roll of sheet metal meant for the external profile with spheroid embossment, an elongate profile 6, a spheroid profile 5, a tensioning system 4, a roller system 7 that shapes the angle bar and a cutting system 8. The production line works on a continuous basis, as controlled by the control system 5. The course of the production process of rolling profiles with a particular transverse section begins by loading rolls of sheet metal with the required properties (thickness and width) onto the external unwinder 2 and internal unwinder 1. Unwinder 3 is wound with a material tape. The unwound sheet metal from the external unwinder 2 reaches the roller system 7 through the spheroid profile 5. During the same time, the unwound sheet metal from the internal unwinder 2 reaches the roller system 7 via the tensioning system 4 and next the elongate profile 6. The material tape from unwinder 3 is placed between the profiled sheet metal tapes 3. Next, the angle bar is shaped in the roller system 7. Next, the angle bar reaches the cutting system 4. The automatic functioning of the production line requires the use of a follow-up cutting system 4. This means that the production line works at a constant rate (the angle bar slides at a constant velocity without stopping for cleavage), and the cut is made on the moving angle bar. This solution markedly increases the efficiency of production. The production line possesses a control system 9 that facilitates a manual and an automatic mode. In the automatic mode, the [control] system is primarily responsible for cutting the angle bar to the required length, and for evaluating the presence of sheet metal and many other detailed activities significant for safety and safeguarding the production line against damage.

### Example 2

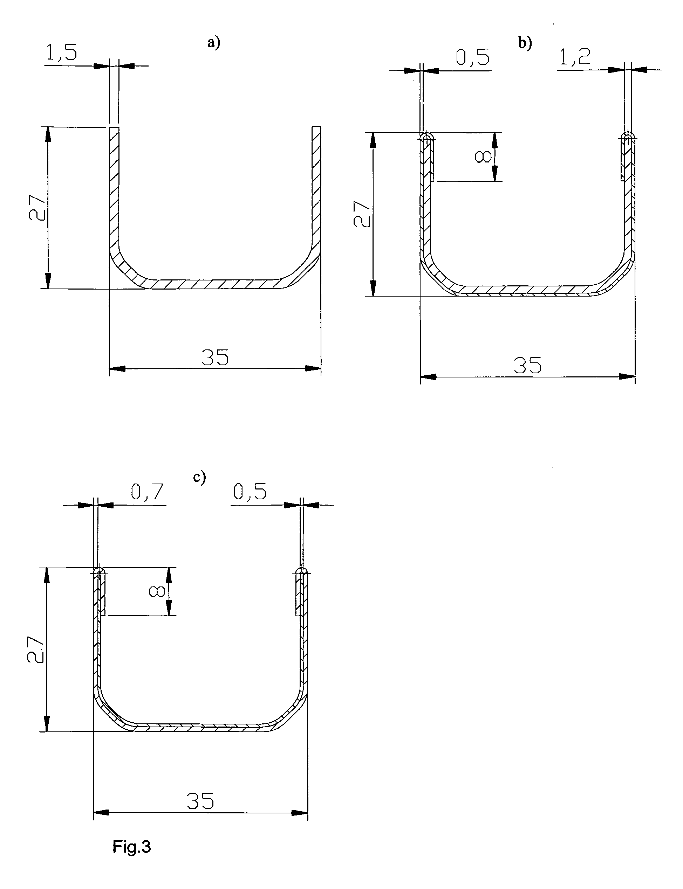

The evaluation was performed for three structural variants shown in Fig. 3, under three-point loading conditions and torque loading. The following three structural solutions of the U35 angle bar transverse sections were used, made of: a - a single zinc-coated sheet metal of DX51D steel (denoted U35 - 1), b - two layers o zinc-coated sheet metal of DX51D steel (denoted U35 - 2, sheet metal: external g_{z} = 0.5 mm, internal g_{w} = 1.2 mm), c - two layers o zinc-coated sheet metal of DX51D steel (denoted U35 - 3, sheet metal: external g_{z} = 0.7 mm, internal g_{w} = 0.5 mm). The tests made under bending and torsional conditions yielded the following results, shown in Table 1 below.

**Table 1**

| Item | Angle bar | Bending load for f = 10/300 | Destructive bending load | Bending rigidity E.Jₓ | Torsional rigidity G-Jₒ |
|---|---|---|---|---|---|
| | | N | N | N·m² | N·m² |
| ¹ | ² | ³ | ⁴ | ⁵ | ⁶ |
| 1 | U35 - 1 (g =1,5 mm) | 189,2 | 1530,4 | 296,7 | 23,4 |
| 2 | U35 - 2 (g_{z} = 0.5 mm, g_{w} = 1.2 mm) | 106,7 | 1203,3 | 167,4 | 19,3 |
| 3 | U35 - 3 (g_{z} = 0.7 mm, g_{w} = 0.5 mm) | 80,3 | 80,3 | 125,9 | 12,7 |

The torsional and bending rigidity are significant parameters due to the practical use of the angle bar. An analysis of the results shows that the angle bar U35 - 1 made of a single layer of sheet metal (Table 3.1, Column 5 and 6) possesses a much larger bending rigidity and a similar torsional rigidity to the angle bar denoted U35-2. The lowest rigidity parameters were obtained for the angle bar U35-3, as shown in table 3.1.

To summarise, the manufacture of angle bars U35-2 and U35-3 from smooth sheet metal did not bring about an improvement of the bending and torsional rigidity in comparison to the values from the angle bar U35-1.

### Example 3 Strength of the angle bar

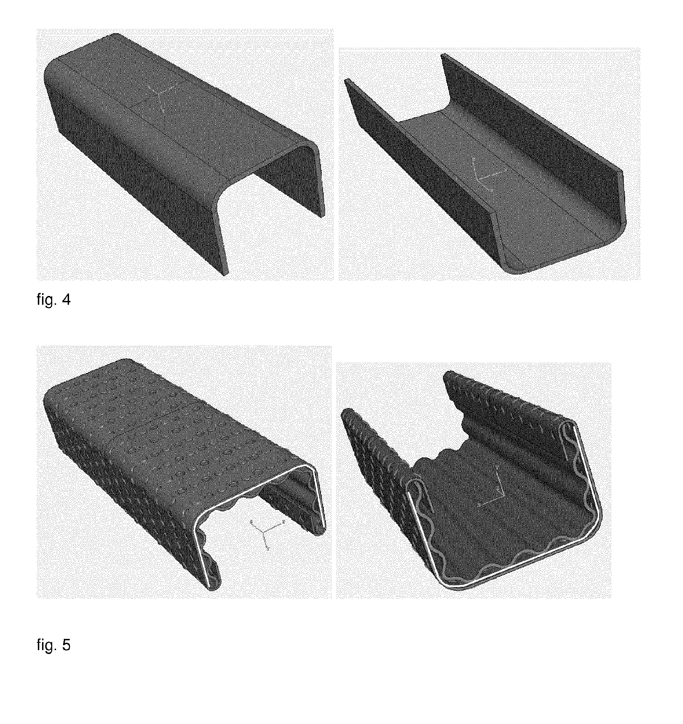

In order to evaluate the strength of the angle bar according to the present invention, we performed calculations using the finite elements method. We have made calculations for two types of angle bar: U35-1 (Fig4a. 3.2.a) and an angle bar of the novel type (Fig. 4b Fig. 3.6)

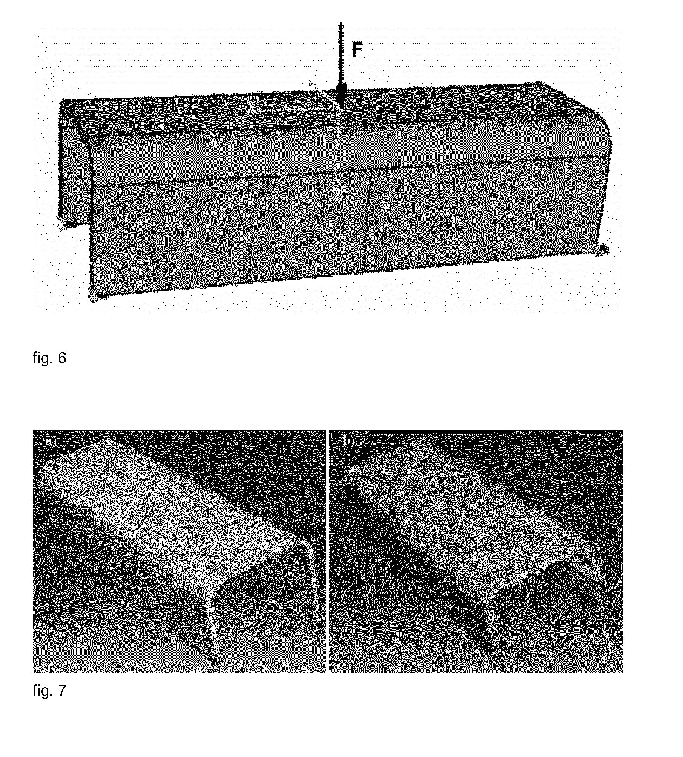

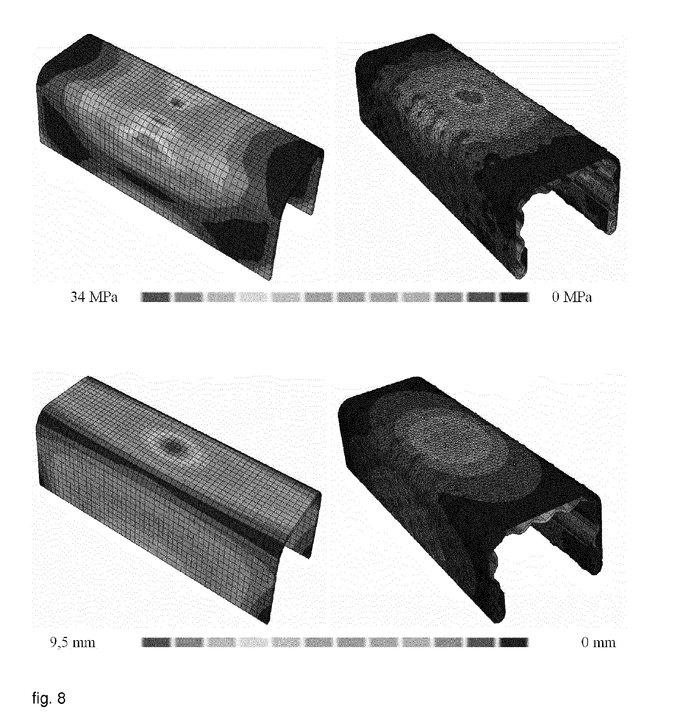

In the numeric calculations, we made use of two parameters describing the material: the Young's modulus E = 210 000 MPa and Poisson's coefficient v = 0.3. Both ends of the angle bar were fixed. The supported beam was loaded with a point force F characterised by a constant direction and magnitude. The loading force was equal for all analysed angle bars. The loading schematic is shown in Fig. 6. The study was performed on two angle bars. Their solid models are shown in Fig. 4 (U35-1) and Fig. 5 (for the novel angle bar). The solid models were divided into finite elements using 4-node TET-type elements and 8-node HEX-type elements (Fig. 7). The calculations performed made it possible to determine the maximum stress and deflection values on beams made of the evaluated angle bars. Detailed results are given in Table 2 and stress and deflection maps are shown in Fig. 8

**Table 2**

| | Angle bar U35-1 | Novel angle bar |
|---|---|---|
| Stresses in MPa | 32.6 | 34.2 |
| Deflections in mm | 9.5 | 4.8 |

In the case of loading with a point force, such as that during the numerical calculations, greater local stress values were obtained for the novel angle bar, which is due to the decreased transverse section of the (sheet metal thickness). Comparing the maximum deflection values and the maps of the aforementioned parameter (Fig. 8) it should be stated that the angle bar possesses more preferable properties that have a deciding effect on use in window profiles. The use of the novel angle bar has made it possible to reduce deflection by some 50%. It should be noted that during the numeric calculations we did not take into effect the strengthening of the material, which occurs during cold-rolling. Taking this into account would likely even improve the results.

Example 4 Thermal penetrance of the angle bar according to the present invention.

**Table 4.1. Thermal penetrance results for three-chamber profile, standard window reinforcement and novel window reinforcement.**

| | Angle bar U35-1 (standard) | Novel angle bar |
|---|---|---|
| Thermal penetrance [W(m/k] | 195 | 119 |

## Claims

1. A method of producing a thin-walled angle bar with a shaped surface, in which the angle bar is profiled in a continuous fashion between rotary shaping dies wherein the sheet metal is subjected to initial processing **characterised in that** it encompasses
a) unwinding an external sheet metal profile with a thickness smaller than the thickness of an internal sheet metal profile, preferably with a thickness of 0.5 mm, from an external unwinder (2) and transferring it onto spheroid profile (5) to make a spheroid embossment in the sheet metal
b) unwinding an internal sheet metal profile, preferably with a thickness of 0.7 mm, from an internal unwinder (1) and transferring it onto an elongate profile (6) via a tensioning system (4) to make an elongate embossment in the sheet metal
c) unwinding a material tape from an unwinder (3) and placing it between the sheet metal exiting the elongate profile (6) of stage b) and the sheet metal exiting the spheroid profile (5) of stage a)
d) shaping the angle bar in a roller system (7) for material exiting stage c) that consists of an external sheet metal profile and an internal sheet metal profile and the tape from unwinder (3) placed between them
e) a follow-up cut on the angle bar exiting the roller system (7) of stage d)
